# EUROPÄISCHE PATENTANMELDUNG

(11) **EP 1 281 914 A2**
(43) Veröffentlichungstag der Anmeldung: **05.02.2003**
(21) Anmeldenummer: 02004463.2
(22) Anmeldetag: 27.02.2002
(51) Int. Cl.: F23N 1/00, F23N 5/10

(54) **Gasarmatur für eine Gastherme oder einem Gaskessel**

(30) Priorität: 04.08.2001 DE 10138390
(71) Anmelder: ROBERT BOSCH GMBH, 70442 Stuttgart (DE)
(72) Erfinder: Krieger, Klaus, 73249 Wernau (DE); Prestle, Thomas, 72622 Nuertingen (DE)

(57) **Zusammenfassung**

Die Erfindung betrifft eine Gasarmatur für eine Gastherme oder einen Gaskessel mit zwei in Flussrichtung des Gases hintereinander angeordneten Ventilen, deren Ventilteller mittels Federn am Ventilsitz in Schließstellung gehalten sind und mittels einer elektromagnetischen oder elektromotorischen Stelleinrichtung in Öffnungssstellung bringbar sind. Ist nach der Erfindung vorgesehen, dass jedem Ventilteller ein Haltemagnet zugeordnet ist, dass die Haltemagnete mittels der Stelleinrichtung mit den Ventiltellerteilen in Kontakt bringbar sind, dass mit der Erregung der Haltemagnete die Ventilteller mit den Haltemagneten elektromagnetisch verbindbar sind und dass durch entgegengesetzt gerichtete Bewegung der Stelleinrichtung die Ventilteller von ihren Ventilsitzen abhebbar und die Ventile in ihre Öffnungsstellung bringbar sind, dann kann der elektrische Leistungsbedarf in der Öffnungstellung der Ventile beachtlich reduziert werden, ohne einen erhöhten Aufwand an Teilen und Gewicht für die Gasarmatur zu benötigen.

## Beschreibung

Die Erfindung betrifft eine Gasarmatur für eine Gastherme oder einen Gaskessel mit zwei in Flussrichtung des Gases hintereinander angeordneten Ventilen, deren Ventilteller mittels Federn am Ventilsitz in Schließstellung gehalten sind und mittels einer elektromagnetischen oder elektromotorischen Stelleinrichtung in Öffnungsstellung bringbar sind.

### Stand der Technik

Diese bekannten Gasarmaturen besitzen aus Sicherheitsgründen zwei Ventile, die im Gasweg hintereinander angeordnet sind. Ist ein Ventil defekt, dann kann das in Ordnung befindliche Ventil den Gasweg schließen. Die Ventile werden durch Elektromagnete geöffnet und nach dem Abschalten der Elektromagnete durch Federkraft geschlossen. Damit zum Beispiel bei einem Gas-Durchlauferhitzer die Wasserauslauf-Temperatur oder bei Heizgeräten die Vorlauftemperatur geregelt werden kann, ist eines der beiden Ventile als Regelventil ausgebildet.

Manche Gasarmaturen besitzen für die Regelung ein drittes Ventil, das auch elektromotorisch betrieben werden kann.

Es sind auch Gasarmaturen mit kleinen elektromagnetischen Ventilen bekannt, die den Gasdruck auf eine Membran leiten, die ein größeres Ventil aufsteuert. Diese Ventile werden als Servo-Ventile bezeichnet, die weniger elektrische Leistungen zum Schalten benötigen.

Diese Gasarmaturen sind entweder aufwendig oder erfordern eine große elektrische Leistung, insbesondere in der Öffnungsstellung.

Es ist Aufgabe der Erfindung, eine Gasarmatur mit zwei Ventilen der eingangs erwähnten Art so zu gestalten, dass die elektrische Leistungsaufnahme bei vermindertem Materialaufwand, Gewicht und Volumen des Armatur-Gehäuses reduziert wird.

### Vorteile der Erfindung

Diese Aufgabe wird nach der Erfindung dadurch gelöst, dass jedem Ventilteller ein Haltemagnet zugeordnet ist, dass die Haltemagnete mittels der Stelleinrichtung mit den Ventiltellerteilen in Kontakt bringbar sind, dass mit der Erregung der Haltemagnete die Ventilteller mit den Haltemagneten elektromagnetisch verbindbar sind und dass durch entgegengesetzt gerichtete Bewegung der Stelleinrichtung die Ventilteller von ihren Ventilsitzen abhebbar und die Ventile in ihre Öffnungsstellung bringbar sind.

Die Gasarmatur benötigt nur eine höhere Ansprechleistung zum Ansprechen der Stelleinrichtung. Ist der Ventilteller mit dem zugeordneten Ventilteller gekoppelt, dann kann diese elektromagnetische Verbindung mit weit kleinerer, elektrischer Leistung gehalten werden. Mit der Stelleinrichtung können die Ventilteller dann von ihren zugeordneten Ventilsitzen abgehoben und geöffnet werden. Zur Aufrechterhaltng der Öffnungsstellungen genügen die geringen Haltekräfte der Haltemagnete. Dabei ist nach einer weiteren Ausgestaltung vorgesehen, dass die elektromagnetische Haltekraft der Haltemagnete größer ist als die Federkraft der die Ventilteller in Schließstellung haltenden Federn.

Die Rückstellung der Ventilteller in die Schließstellungen ist dadurch sichergestellt, dass die Federn sich am Ventilteller und einem Gehäuseteil der Ventile abstützen und dass die Ventilteller in dem Gehäuseteil verstellbar geführt sind, sowie dass die Verstellbewegung der Ventilteller auf der den Federn abgekehrten Seiten des Gehäuseteils durch Ventiltellerteile begrenzt ist.

Der konstruktive Aufbau der Gasarmatur kann nach einer Ausgestaltung so ausgeführt sein, dass die Verstellbewegungen der Ventilteller der beiden Ventile parallel zueinander ausgerichtet sind und dass die Haltemagnete an einer beweglichen Brücke befestigt sind, die mittels der Stelleinrichtung in der Verstellrichtung der Ventilteller hin und her verstellbar ist.

Mit der Verstellung der Brücke werden beide Haltemagnete gleichzeitig mit den Ventiltellern in Kontakt gebracht.

Werden die Haltemagnete erregt, dann werden die Ventilteller elektromagnetisch mit den Haltemagneten verbunden. Wird die Stelleinrichtung wieder zurückgestellt, was durch Polaritätsumkehr der Erregung geschehen kann, dann heben die beiden Ventilteller gleichzeitig von den Ventilsitzen der beiden Ventile ab. Die Ventile nehmen ihre Öffnungsstellungen ein und geben den Gasweg frei. Wird die Erregung der Stelleinrichtung abgeschaltet, dann stellen die Federn die Ventilteller in die Schließstellung zurück, wobei sie sich an den Ventilsitzen der Ventile federnd abstützen und diese verschließen.

Die Stelleinrichtung ist vorzugsweise als Stellmotor ausgebildet, mit dem eine mit der die Hubmagnete tragenden Brücke verbundene Stellspindel in beiden Drehrichtungen antreibbar ist.

Der konstruktive Aufbau der Gasarmatur kann nach einer weiteren Ausgestaltung auch so ausgeführt sein, dass die Verstellrichtungen der Ventilteller der beiden Ventile gleichsinnig hintereinander ausgerichtet sind und dass die fest miteinander gekoppelten Haltemagnete mittels der Stelleinrichtung in der gemeinsamen Verstellrichtung hin- und herbewegbar sind.

Für die Verstellung der Hubmagnete in Richtung des zugeordneten Ventiltellers ist die Verstellrichtung der Stelleinrichtung umkehrbar. Dies bedeutet, dass aus der Schließstellung heraus die Haltemagnete nacheinander in zwei gegenläufigen Verstellbewegungen mit den Ventiltellern gekoppelt werden, wobei nach dem ersten Verstellschritt nach der Umkehr der Verstellbewegung nur das eine Ventil geöffnet wird. Ist auch der zweite Haltemagnet mit dem zugeordneten Ventilteller gekoppelt, dann wird beim Zurückstellen der Hubmagnete in die Ausgangsstellung auch das zweite Ventil geöffnet. Die Schließstellung beider Ventile wird durch die Haltemagnete mit geringer elektrischer Leistung aufrecht erhalten. Wird die Erregung der Haltemagnete abgeschaltet, bleiben die Haltemagnete in ihrer Ausgangsstellung, die Ventilteller werden über die Federn in ihre Schließstellungen zurückgestellt.

Die Verstellung der Haltemagnete mittels der Stelleinrichtung ist dabei so gelöst, dass die Ventilteller in den Seitenschenkeln einer U-förmigen Brücke verstellbar geführt sind, dass die als Hubmagnet ausgebildete Stellrichtung zwischen den beiden Haltemagneten angeordnet ist und dass die Selleinrichtung gegenüber der Brücke unverschiebbar festgelegt ist und je nach Polarität der Erregung einen die Haltemagnete miteinander verbindenden Anker hin und her verstellt.

Für die Abstützung der Federn ist vorgesehen, dass sich die Ventilteller über die Federn auf den Außenseiten der Seitenschenkel der U-förmigen Brücke abstützen und dass die den Haltemagneten zugekehrten Ventiltellerteile der Ventilteller als Ankerplatte für die Haltemagnete ausgebildet sind.

Um den Leistungsbedarf für die Haltemagnete zu reduzieren, sieht eine Weiterbildung vor, dass die Haltemagnete erst bei einer Kontaktnahme mit den zugekehrten Ventiltellerteilen der Ventilteller erregbar sind und die Ventilteller elektromagnetisch mit den Haltemagneten verbinden.

Die Erregerleistung der Haltemagnete ist wesentlich kleiner als die elektrische Ansprechleistung der Stelleinrichtung, sie muss jedoch größer sein als die Federkraft der Feder, die die Ventilteller in der Schließstellung hält.

### Zeichnungen

Die Erfindung wird anhand von zwei in den Zeichnungen dargestellten Ausführungsbeispielen näher erläutert. Es zeigen:
- Fig. 1: ein erstes Ausführungsbeispiel mit zwei gleichzeitig an die Ventilteller ankoppelbaren Haltemagneten in der Ausgangsstellung mit beiden Ventilen in der Schließstellung,
- Fig. 2: die Gasarmatur nach Fig. 1 mit den an die Ventilteller angekoppelten Haltemagneten,
- Fig. 3: die Gasarmatur nach Fig. 1 in der Öffnungsstellung mit beiden von ihren Ventilsitzen abgehobenen Ventiltellern,
- Fig. 4: ein zweites Ausführungsbeispiel einer Gasarmatur mit einer Stelleinrichtung für die beiden in einer Bewegungsrichtung hintereinander angeordneten und nacheinander ankoppelbaren Haltemagneten in der Ausgangs-Schließstellung,
- Fig. 5: die Gasarmatur nach Fig. 4 bei der Ankopplung des linken Haltemagneten an den zugeordneten Ventilteller,
- Fig. 6: die Gasarmatur nach Fig. 4 bei geöffnetem linken Ventil und geschlossenem rechten Ventil,
- Fig. 7: die Gasarmatur nach Fig. 4 bei geöffnetem linken Ventil und am Ventilteller des rechten Ventils angekoppelten rechtem Haltemagneten und
- Fig. 8: die Gasarmatur nach Fig. 4 mit beiden Ventilen in der Öffnungsstellung und der in die Ausgangsstellung zurückgestellten Stelleinrichtung.

### Ausführungsbeispiel

Von der Gasarmatur sind in den Zeichnungen jeweils die beiden Ventile V1 und V2 mit ihren Ventiltellern 10.1 und 0.2 sowie ihren Ventilsitzen 11.1 und 11.2 schematisch dargestellt.

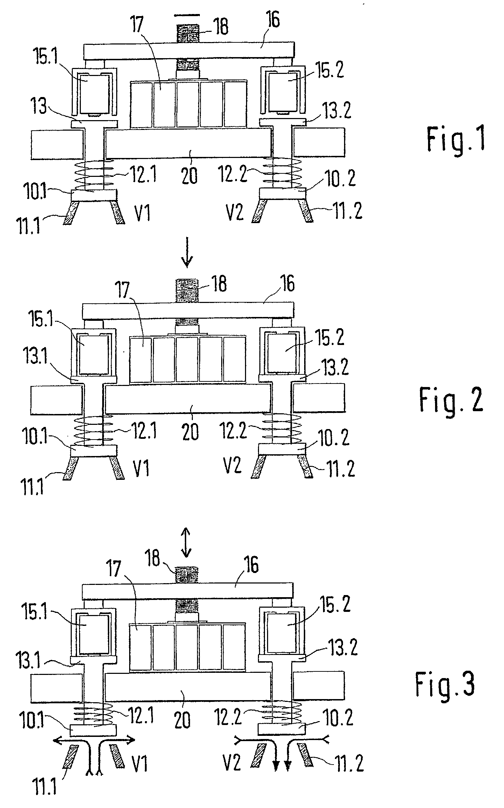

In der Fig. 1 des ersten Ausführungsbeispiels verschließen in der gezeigten Ausgangsstellung einer Stelleinrichtung 17, die Ventilteller 10.1 und 10.2 die Ventilsitze 11.1 und 11.2 der Ventile V1 und V2. Dabei sind die mit ihren Achsen parallel ausgerichteten Ventilteller 10.1 und 10.2 in einem Gehäuseteil 20 der Gasarmatur verstellbar geführt. Federn 12.1 und 12.2 stützen sich an den Ventiltellern 10.1 und 10.2 sowie an dem Gehäuseteil 20 ab. Die Federkraft hält den zugeordneten Ventilteller 10.1 bzw. 10.2 an dem zugeordneten Ventilsitz 11.1 bzw. 11.2, so dass beide Ventile V1 und V2 ihre Schließstellung einnehmen.

Jedem Ventilteller 10.1 bzw. 10.2 ist ein Haltemagnet 15.1 bzw. 15.2 zugeordnet, denen die Ventiltellerteile 13.1 bzw. 13.2 als Anker gegenüberstehen. Die beiden Haltemagnete 15.1 und 15.2 sind an einer Brücke 16 angebracht, die mittels einer Stelleinrichtung 17 in Richtung zu den Ventiltellern 10.1 und 10.2 und auch von diesen wieder weg verstellt werden kann. Daher kann die Stelleinrichtung 17 als in beiden Drehrichtungen betreibbarer Stellmotor für eine Stellspindel 18 ausgebildet sein.

Wie Fig. 2 zeigt, kann durch entsprechende Polarität der Antriebsleistung die Brücke 20 mit den Haltemagneten 15.1 und 15.2 so weit verstellt werden, bis die Haltemagnete 15.1 und 15.2 an den Ventiltellerteilen 13.1 und 13.2 anliegen. Werden in dieser Stellung die Haltemagnete 15.1 und 15.2 erregt, dann werden elektromagnetische Verbindungen zwischen den Haltemagneten 15.1 und 15.2 und den Ventiltellerteilen 13.1 und 13.2 hergestellt. Die Erregung der Haltemagnete 15.1 und 15.2 erfolgt dabei vorzugsweise erst, wenn die Haltemagnete 15.1 und 15.2 an den Ventiltellerteilen 13.1 und 13.2 angekoppelt sind.

Danach wird die Stelleinrichtung 17 durch Stromumkehr in die Ausgangsstellung zurückgestellt. Wie Fig. 3 zeigt, werden dabei aufgrund der erregten Haltemagnete 15.1 und 15.2 die Ventilteller 10.1 und 10.2 von ihren Ventilsitzen 11.1 und 11.2 abgehoben und beide Ventile V1 und V2 geöffnet. Die Federn 12.1 und 12.2 werden mehr gespannt.

Die erhöhten Federkräfte der Federn 12.1 und 12.2 stellen die Ventilteller 10.1 und 10.2 in ihre Schließstellung zurück, sobald die Erregung der Haltemagnete 15.1 und 15.2 abgeschaltet wird. Die Haltemagnete 15.1 und 15.2 nehmen wieder ihre Ausgangsstellung nach Fig. 1 ein. Die Gasarmatur erfordert in der Öffnungsstellung nach Fig. 3 nur die Erregerleistung für die Haltemagnete 15.1 und 15.2, die wesentlich kleiner ist als die Antriebsleistung für den Stellmotor zur Verstellung der Brücke 16 mit den Haltemagneten 15.1 und 15.2.

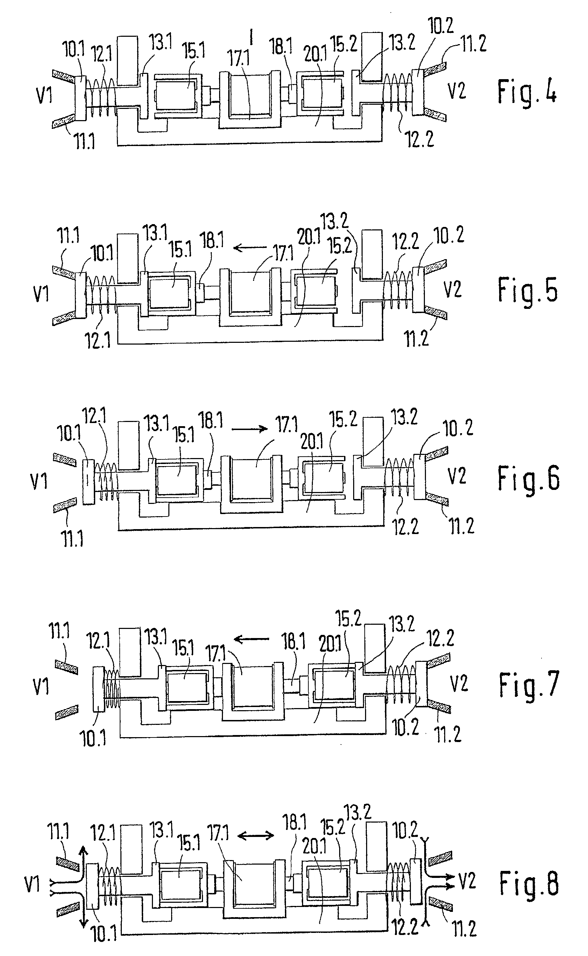

Bei dem Ausführungsbeispiel nach Fig. 4 sind die Achsen der beiden Ventile V1 und V2 mit ihren Ventiltellern 10.1 und 10.2 auf einer Geraden hintereinander angeordnet und die Ventiltellerteile 13.1 und 13.2 einander zugekehrt. Die Ventilteller 10.1 und 10.2 sind mittels Federn 12.1 und 12.2 wieder an ihren Ventilsitzen 11.1 und 11.2 in Schließstellung gehalten.

Das Gehäuseteil 20.1 ist diesmal U-förmig ausgebildet und die Ventilteller 10.1 und 10.2 sind in den Seitenschenkeln des Gehäuseteils 20.1 verstellbar geführt. Zwischen den Seitenschenkeln des Gehäuseteils 20.1 ist mittig eine als Hubmagnet ausgebildete Stelleinrichtung 17.1 unverschiebbar angeordnet. Mit der Stelleinrichtung 17.1 kann ein Anker 18.1 hin und her bewegt werden, der zu beiden Seiten der Stelleinrichtung 17.1 fest mit einem Haltemagneten 15.1 bzw. 15.2 verbunden ist. Befindet sich die Stellrichtung 17.1 im nicht erregten Zustand, dann nimmt der Anker 18.1 die in Fig. 4 gezeigte Ausgangsstellung ein. Die Haltemagnete 15.1 und 15.2 sind nicht erregt und die Federn 12.1 und 12.2 halten die Ventilteller 10.1 und 10.2 auf ihren zugeordneten Ventilsitzen 11.1 und 11.2. Die beiden in Reihe gehaltenen Ventile V1 und V2 befinden sich in Schließstellung, wie Fig. 1 zeigt.

Wird die Stelleinrichtung 17.1 so erregt, dass der Anker 18.1 nach links verstellt wird, bis der Haltemagnet 15.1 mit dem Ventiltellerteil 13.1 in Kontakt kommt, dann wird der Haltemagnet 15.1 erregt und stellt eine elektromagnetische Verbindung mit dem Ventiltellerteil 13.1 her, wie Fig. 5 zeigt.

Wird die Stelleinrichtung 17.1 wieder in die Ausgangsstellung zurückgestellt, dann nimmt der Haltemagnet 15.1 den Ventilteller 10.1 mit und hebt diesen von dem Ventilsitz 11.1 ab. Das Ventil V1 ist geöffnet, wie Fig. 6 zeigt. Das Ventil V2 bleibt jedoch noch geschlossen.

Wird die Stelleinrichtung 17.1 im entgegengesetzten Sinn erregt, dann wird der Anker 18.1 mit dem Haltemagneten 15.2 nach rechts verstellt, bis er mit dem Ventiltellerteil 13.2 in Kontakt kommt, dann wird auch der Haltemagnet 15.2 erregt und stellt eine elektromagnetische Verbindung zum Ventiltellerteil 13.2 her, wie der Fig. 7 zu entnehmen ist.

Wird danach die Stelleinrichtung 17.1 wieder in die Ausgangsstellung gebracht, dann nimmt der Haltemagnet 15.2 den Ventilteller 10.2 mit und hebt diesen vom Ventilsitz 11.2 ab. Das Ventil V2 wird ebenfalls geöffnet. Das Ventil V1 bleibt während der Verstellbewegungen des Ankers 18.1 und der Haltemagnete 15.1 und 15.2 nach den Fig. 6, 7 und 8 in seiner Öffnungsstellung.

Die beiden Ventile V1 und V2 geben den Gasweg nach der Rückkehr in die Ausgangsstellung nach Fig. 8 frei. Werden die Haltemagnete 15.1 und 15.2 stromlos geschaltet, dann bleibt die Stelleinrichtung 17.1 mit dem Anker 18.1 in der Ausgangsstellung. Die Federn 12.1 und 12.2 stellen die Ventilteller 10.1 und 10.2 in die Schließstellungen nach Fig. 1 ein.

Es bleibt noch zu erwähnen, dass die Stelleinrichtungen 17 und 17.1 auch so gesteuert werden können, dass die Ventilteller 10.1 und/oder 10.2 Zwischenstellungen zwischen der Öffnungs- und Schließstellung einnehmen und so als Regelventile für den Gasfluss verwendet werden können.

## Patentansprüche

1. Gasarmatur für eine Gastherme oder einen Gaskessel mit zwei in Flussrichtung des Gases hintereinander angeordneten Ventilen, deren Ventilteller mittels Federn am Ventilsitz in Schließstellung gehalten sind und mittels einer elektromagnetischen oder elektromotorischen Stelleinrichtung in Öffnungsstellung bringbar sind,
**dadurch gekennzeichnet,**
**dass** jedem Ventilteller (10.1; 10.2) ein Haltemagnet (15.1; 15.2) zugeordnet ist,
**dass** die Haltemagnete (15.1; 15.2) mittels der Stelleinrichtung (17, 17.1) mit den Ventiltellerteilen (13.1; 13.2) in Kontakt bringbar sind,
**dass** mit der Erregung der Haltemagnete (15.1; 15.2) die Ventilteller (10.1; 10.2) mit den Haltemagneten 15.1; 15.2) elektromagnetisch verbindbar sind und
**dass** durch entgegengesetzt gerichtete Bewegung der Stelleinrichtung (17, 17.1) die Ventilteller (10.1, 10.2) von ihren Ventilsitzen (11.1; 11.2) abhebbar und die Ventile (V1, V2) in ihre Öffnungsstellung bringbar sind.

2. Gasarmatur nach Anspruch 1,
**dadurch gekennzeichnet,**
**dass** die elektromagnetische Haltekraft der Haltemagnete (15.1; 15.2) größer ist als die Federkraft der die Ventilteller (10.1; 10.2) in Schließstellung haltenden Federn (12.1; 12.2).

3. Gasarmatur nach Anspruch 1 oder 2,
**dadurch gekennzeichnet,**
**dass** die Federn (12.1; 12.2) sich am Ventilteller (10.1; 10.2) und einem Gehäuseteil (20) der Ventile (V1, V2) abstützen und
**dass** die Ventilteller (10.1; 10.2) in dem Gehäuseteil (20) verstellbar geführt sind.

4. Gasarmatur nach einem der Ansprüche 1 bis 3,
**dadurch gekennzeichnet,**
**dass** die Verstellbewegung der Ventilteller (10.1; 10.2) auf der den Federn (12.1; 12.2) abgekehrten Seiten des Gehäuseteils (20) durch Ventiltellerteile (13.1; 13.2) begrenzt ist.

5. Gasarmatur nach einem der Ansprüche 1 bis 4,
**dadurch gekennzeichnet,**
**dass** die Verstellbewegungen der Ventilteller (10.1; 10.2) der beiden Ventile (V1, V2) parallel zueinander ausgerichtet sind und
**dass** die Haltemagnete (15.1, 15.2) an einer beweglichen Brücke (16) befestigt sind, die mittels der Stelleinrichtung (17) in der Verstellrichtung der Ventilteller (10.1, 10.2) hin und her verstellbar ist.

6. Gasarmatur nach Anspruch 5,
**dadurch gekennzeichnet,**
**dass** die Stelleinrichtung (17) als Stellmotor ausgebildet ist, mit dem eine mit der Brücke (16) verbundene Stellspindel (18) in beiden Drehrichtungen antreibbar ist.

7. Gasarmatur nach einem der Ansprüche 1 bis 4,
**dadurch gekennzeichnet,**
**dass** die Verstellrichtungen der Ventilteller (10.1; 10.2) der beiden Ventile (V1, V2) gleichsinnig hintereinander ausgerichtet sind und
**dass** die fest miteinander gekoppelten Haltemagnete (15.1; 15.2) mittels der Stelleinrichtung (17.1) in der gemeinsamen Verstellrichtung hin- und herbewegbar sind.

8. Gasarmatur nach Anspruch 7,
**dadurch gekennzeichnet,**
**dass** die Ventilteller (10.1; 10.2) in den Seitenschenkeln einer U-förmigen Brücke (20.1) verstellbar geführt sind,
**dass** die als Hubmagnet ausgebildete Stellrichtung (17.1) zwischen den beiden Haltemagneten (15.1; 15.2) angeordnet ist und
**dass** die Selleinrichtung (17.1) gegenüber der Brücke (20.1) unverschiebbar festgelegt ist und je nach Polarität der Erregung einen die Haltemagnete (15.1, 15.2) miteinander verbindenden Anker (18.1) hin und her verstellt.

9. Gasarmatur nach Anspruch 7 oder 8,
**dadurch gekennzeichnet,**
**dass** sich die Ventilteller (10.1; 10.2) über die Federn (12.1; 12.2) auf den Außenseiten der Seitenschenkel der U-förmigen Brücke (20.1) abstützen und
**dass** die den Haltemagneten (15.1; 15.2) zugekehrten Ventiltellerteile (13.1; 13.2) der Ventilteller (10.1; 10.2) als Ankerplatte für die Haltemagnete (15.1; 15.2) ausgebildet sind.

10. Gasarmatur nach einem der Ansprüche 1 bis 9,
**dadurch gekennzeichnet,**
**dass** die Haltemagnete (15.1; 15.2) erst bei einer Kontaktnahme mit den zugekehrten Ventiltellerteilen (13.1; 13.2) der Ventilteller (10.1; 10.2) erregbar sind und die Ventilteller (10.1; 10.2) elektromagnetisch mit den Haltemagneten (15.1; 15.2) verbinden.

11. Gasarmatur nach einem der Ansprüche 1 bis 10,
**dadurch gekennzeichnet,**
**dass** die Erregerleistung der Haltemagnete (15.1; 15.2) wesentlich kleiner ist als die elektrische Ansprechleistung der Stelleinrichtung (17, 17.1).

12. Gasarmatur nach einem der Ansprüche 1 bis 11,
**dadurch gekennzeichnet,**
**dass** die Stelleinrichtungen (17, 17.1) so steuerbar sind, dass die Ventilteller (10.1; 10.2) Zwischenstellungen zwischen der Öffnungs- und Schließstellung einnehmen.
